# EUROPEAN PATENT SPECIFICATION

(11) **EP 0 780 614 B1**
(45) Date of publication and mention of the grant of the patent: **10.05.2000**
(21) Application number: 95830530.2
(22) Date of filing: 21.12.1995
(51) Int. Cl.: F16K 27/06, B67D 1/14

(54) **A ball for taps, for tapping drinks**
Ein Kugel für Zapfhähne, zum Zapfen von Getränken
Tournant sphérique pour des robinets, pour la distribution de boissons

(43) Date of publication of application: 25.06.1997
(73) Proprietor: BREW SERVICE S.r.l., 15040 Castelleto Monferrato (AL) (IT)
(72) Inventor: Rivaletto Pietro., 15049 San Lorenzo-Vignale Monterrato(AL) (IT)
(74) Representative: Mascioli, Alessandro

(56) References cited:
- EP-A- 0 417 706
- BE-A- 1 005 357
- FR-A- 2 476 791
- GB-A- 1 522 295

## Description

The present invention concerns a device comprising a ball system for determining the closing and/or the delivery of taps for the tapping of drinks like ales, wines, fruit juices, mineral waters etc.

The known taps for tapping drinks are realized with structures containing particular mechanisms which, on damages or even partial breaking, request the replacement of the complete block, with resulting complications for the hygiene of the drinks that are not yet tapped.

The main aim of the present invention is the one of realizing a kind of tap to which, in case of damage or breaking, a quick and easy repair with the replacing of a cartridge with few components.

A patent BE-A-1005357 (Vervenne) which forms a basis for the preamble of claim 1, is known in which a tap is described for the distribution of food liquids containing carbon dioxide, in particular for gassed drinks, characteriz-ed in the presence of a marble having an axial boring that forms, in opening position, a part of the passage from the source of the liquid to the outlet from the tap, and which, by means of rotation, provides for the closing of said tap.

The aim set forth is reached by means of the device according to the present invention as defined in the claim, comprising a ball system with a bush, gasket and washer that will determine a considerable efficiency in functioning in the tapping of drinks and in its closing, but in the same time, forming a cartridge that may be taken off and replaced in case of damage.

The device according to the present invention will be described more in detail hereinbelow relating to the enclosed drawings in which an embodiment is shown.

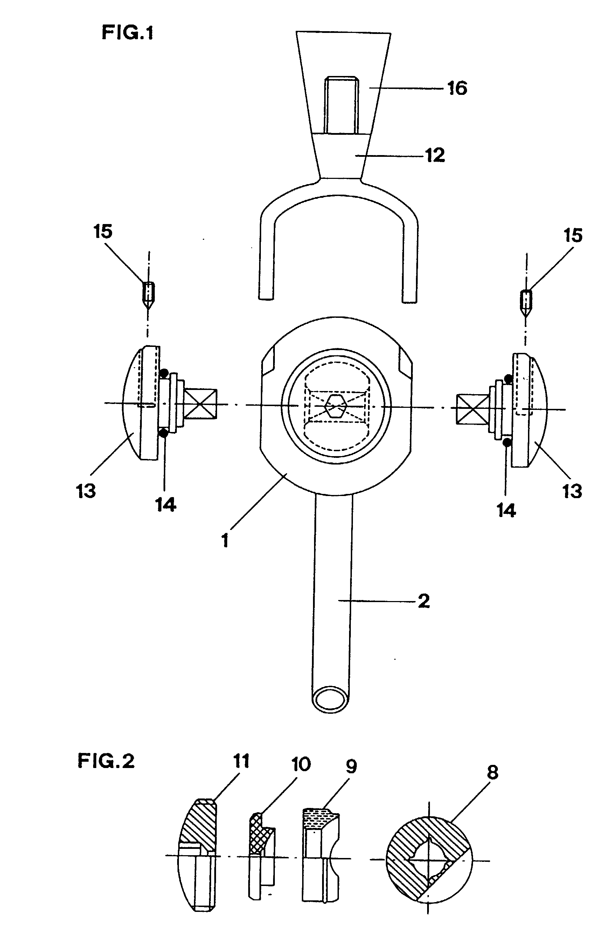

Figure 1 shows a front and exploded view of a ball device for taps for tapping drinks.

Figure 2 shows the components of the replaceable cartridge (except the bush itself).

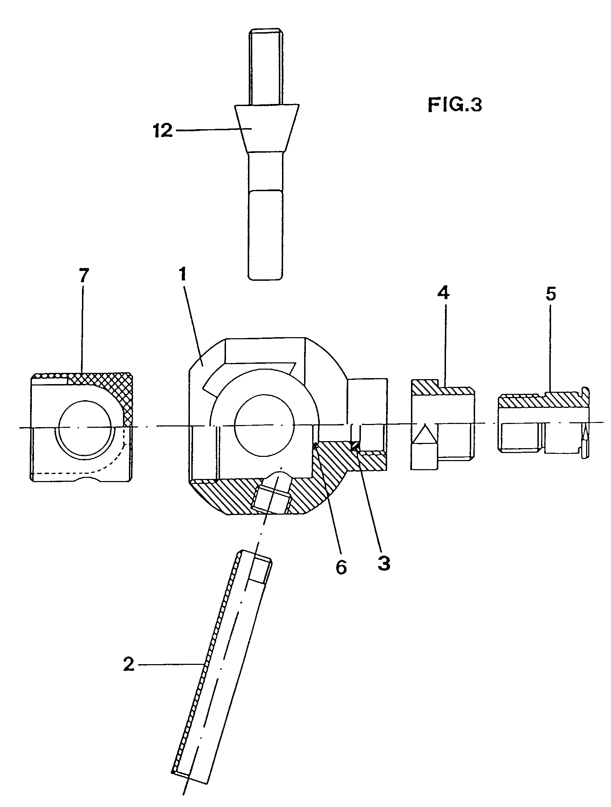

Figure 3 shows a lateral and exploded view of the device according to the preceding figures.

The enclosed figues show a ball device for taps for tapping drinks, comprising:
- a body 1,
- a spout 2,
- a gasket 3,
- two threaded pipe-fittings 4, 5,
- an O-ring 6,
- a bung 11,
- a fork 12,
- two lateral caps 13,
- an O-ring 14,
- a plurality of grains 15,
- a knob 16
and, housed in body 1, a cartridge consisting of a bush 7 with an inner ball 8, installed with the interposition of the gasket 9 and of the washer 10, all closed with said bung 11, and that may be operated for delivery and closing by means of said handle 16 so that, in case of damage, the whole cartridge may be taken off and replaced, by opening said bung 11.

For what concerns the realization of the device according to the present invention, the elements 1, 4, 11, 12 and 13 may be chromium-plated, while said ball 8 is preferably treated with titanium.

## Claims

1. A ball device for taps for tapping drinks, comprising:
- a body (1),
- a spout (2),
- a gasket (3),
- two threaded pipe-fittings (4, 5),
- an O-ring (6),
- a fork (12),
- two lateral caps (13),
- an O-ring (14),
- a plurality of grains (15),
- a knob (16),
- an inner ball (8) that may be operated for delivery and closing by means of said knob (16),
characterised in that: said ball device further comprises a cartridge, housed in body (1), said cartridge consisting of one bush (7), said inner ball (8), a second gasket (9) and a washer (10), whereby said ball is installed with the interposition of said second gasket (9) and of said washer (10); and in that said cartridge is closed by a bung (11), so that, in case of damage, the whole cartridge may be taken off and replaced, by opening said bung (11).

## Patentansprüche

1. Kugelvorrichtung für Getränkeabzapfhähne, bestehend aus:
- einem Körper (1)
- einem Ausgiesser (2)
- einer Dichtung (3)
- zwei Gewindeanschlüssen (4, 5)
- einem O Ring (6)
- einem Gabelstück (12)
- zwei seitlichen Verschlüssen (13)
- einem O Ring (14)
- mehreren Dübeln (15)
- einem Griff (16)
- einer zum Ausgiessen und zum Verschliessen bewegbaren Kugel (8) besagten Griffes (16),
dadurch gekennzeichnet dass: besagte Kugelvorrichtung ausserdem einen Einsatz enthält, der im Körper (1) untergebracht ist, bestehend aus einer Buchse (7) aus besagter inneren Kugel (8), aus einer zweiten Dichtung (9), und einer Scheibe (10), mit der besagte Kugel in Kontakt gebracht wird, und zwar durch Zwischenschaltung besagter zweiten Dichtung (9) besagter Scheibe (10); und dadurch gekennzeichnet dass besagter Einsatz von einem Verschluss (11) verschlossen ist, und zwar derart, dass im Falle eines Defektes der gesamte Einsatz entfernt und ersetzt wird, und zwar durch die Offnung besagten Verschlusses (11).

## Revendications

1. Boisseau pour robinets de prélèvement de boissons comprenant:
- un corps (1)
- un tuyau d'évacuation (2)
- une guarniture d'étanchéité (3)
- deux raccords tubulaires filetés (4, 5)
- un joint torique (6)
- une fourche (12)
- deux capuchons extérieurs (13)
- un joint torique (14)
- une pluralité de goupilles (15)
- une poignée (16)
- un boisseau interne (8) qui peux être actionné pour l'alimentation et pour la fermature à l'aide de dite poignée (16),
caractérisée en ce que: ledit boisseau en outre comprende une cartouche, logée dans un corps (1) qui c'est constituée d'une coquille (7), dudit boisseau interne (8), d'une deuxième garniture d'étanchéité (9) et d'une rondelle (10), avec les quelles ledit boisseau c'est monté avec interposition de dite deuxième garniture d'étanchéité (9) et de dite rondelle (10); et en ce que dite cartouche c'est obturée à l'aide dudit tampon (11), de manière qu'en cas de dommages, toute la cartouche puisse être enlevée et remplacée, en ouvrant ledit tampon (11).
